# EUROPEAN PATENT APPLICATION

(11) **EP 1 511 318 A2**
(43) Date of publication of application: **02.03.2005**
(21) Application number: 04254946.9
(22) Date of filing: 18.08.2004
(51) Int. Cl.: H04N 7/24

(54) **Video decoder and video decoding method**

(30) Priority: 20.08.2003 KR 2003057504
(71) Applicant: Samsung Electronics Co., Ltd., Suwon-si, Gyeonggi-do (KR)
(72) Inventor: Jeon, Jong-gu, Yeongtong-gu Suwon-si Gyeonggi-do (KR); Park, Ju-hee, Yeongtong-gu, Suwon-si Gyeonggi-do (KR)
(74) Representative: Robinson, Ian Michael

(57) **Abstract**

A reliable decoder and decoding method in a digital multimedia broadcast reception system are provided. The reliable decoding method includes: if an interrupt call signal is received, performing an interrupt service routine to store a stream index; reading the stored stream index and by depacketizing a packet having the read stream index, extracting decoding information; and by referring to extracted decoding information, reading a payload included in the packet and decoding the read payload. Accordingly, since preparation of decoding is processed by using an interrupt method, a plurality of elements do not need to be checked continuously unlike in a polling method, such that the performance of an MPEG-4 system is enhanced.

## Description

The present invention relates to digital multimedia broadcast reception, and more particularly, to a moving picture experts group 4 (MPEG-4) system.

In the conventional MPEG-4 system, a pooling method is used for pre-decoding. However, since a plurality of elements should continuously check other elements in the polling method, there is a limit in improving the performance of an MPEG-4 system. In addition, if inbound traffic is congested because the bit rate of a received transport stream is not constant, loss of packets occurs and ultimately, reliable decoding cannot be achieved.

According to the present invention there is provided an apparatus and method as set forth in the appended claims. Preferred features of the invention will be apparent from the dependent claims, and the description which follows.

The present invention provides an apparatus and method by which preparation of decoding is processed by using an interrupt method such that a plurality of elements do not need to be continuously checked unlike in a polling method.

According to an aspect of the present invention, there is provided a first reliable decoding method including: if an interrupt call signal is received, performing an interrupt service routine to store a stream index; reading the stored stream index and by depacketizing a packet having the read stream index, extracting decoding information; and by referring to extracted decoding information, reading a payload included in the packet and decoding the read payload.

According to another aspect of the present invention, there is provided a first reliable decoding apparatus including: an interrupt service routine performing unit which if an interrupt call signal is received, performs an interrupt service routine to store a stream index; a packet parsing unit which reads the stored stream index and by depacketizing a packet having the read stream index, extracts decoding information; and a decoding unit which by referring to extracted decoding information, reads a payload included in the packet and decodes the read payload.

According to still another aspect of the present invention, there is provided a second reliable decoding method including: if an interrupt call signal from a central processing unit (CPU) is received, performing an interrupt service routine to store a stream index of packets stored in each stream in a packet buffer, in a stream index queue; reading the stored stream index from the stream index queue, reading packets having the read stream index, from the packet buffer, extracting decoding information by depacketizing the read packets, and storing the extracted decoding information by the stream in a decoding information buffer; and by referring to the decoding information stored in each stream in the decoding information buffer, reading payloads included in the packets stored in each stream in the packet buffer, and decoding the read payloads.

According to yet still another aspect of the present invention, there is provided a second reliable decoding apparatus including: an interrupt service routine performing unit which if an interrupt call signal from a CPU is received, performs an interrupt service routine to store a stream index of packets stored in each stream in a packet buffer, in a stream index queue; a packet parsing unit which reads the stored stream index from the stream index queue, reads packets having the read stream index from the packet buffer, extracts decoding information by depacketizing the read packets, and stores the extracted decoding information by the stream in a decoding information buffer; and a decoding unit which by referring to the decoding information stored by the stream in the decoding information buffer, reads payloads included in the packets stored by the stream in the packet buffer, and decodes the read payloads.

According to a further aspect of the present invention, there is provided a computer readable recording medium having embodied thereon a computer program for the first reliable decoding method.

According to an additional aspect of the present invention, there is provided a computer readable recording medium having embodied thereon a computer program for the second reliable decoding method.

The above and other features and advantages of the present invention will become more apparent by describing in detail exemplary embodiments thereof with reference to the attached drawings in which:
Figure 1 is a diagram of the structure of a digital multimedia broadcast receiver to which the present invention can be applied;
Figure 2 is a diagram of the structure of a reliable decoding apparatus according to a preferred embodiment of the present invention;
Figure 3 is a diagram showing the relations among a transport stream packet, a packetized elementary stream (PES) packet, and a 14496 section complying with the MPEG-4 standard;
Figure 4 is a diagram showing a storage format of a packet buffer shown in Figure 2;
Figure 5 is a detailed diagram of the structure of a transport stream demultiplexer shown in Figure 2;
Figure 6 is a detailed diagram of the structure of an interrupt service routine performing unit shown in Figure 2;
Figure 7 is a detailed diagram of the structure of a packet parsing unit shown in Figure 2; and
Figure 8 is a flowchart of the steps performed by a reliable decoding method according to a preferred embodiment of the present invention.

The present invention will now be described more fully with reference to the accompanying drawings, in which exemplary embodiments of the invention are shown.

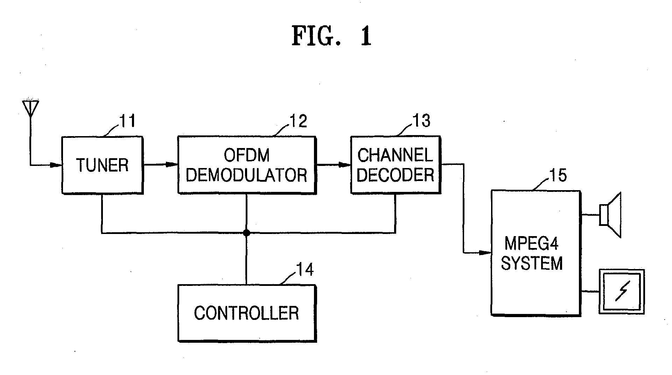

Referring to Figure 1, a digital multimedia broadcast receiver includes a tuner 11, an orthogonal frequency division multiplexing (OFDM) demodulator 12, a channel decoder 3, a controller 14, and a moving picture experts group-4 (MPEG-4) system 15.

A digital multimedia broadcasting system is a broadcasting system for providing multimedia services such as various video, audio, and data, to a mobile user, for example, a user in a car or a user on foot. The present invention relates to efficiently designing of the MPEG-4 system 15, which is one element of the digital multimedia broadcast receiver.

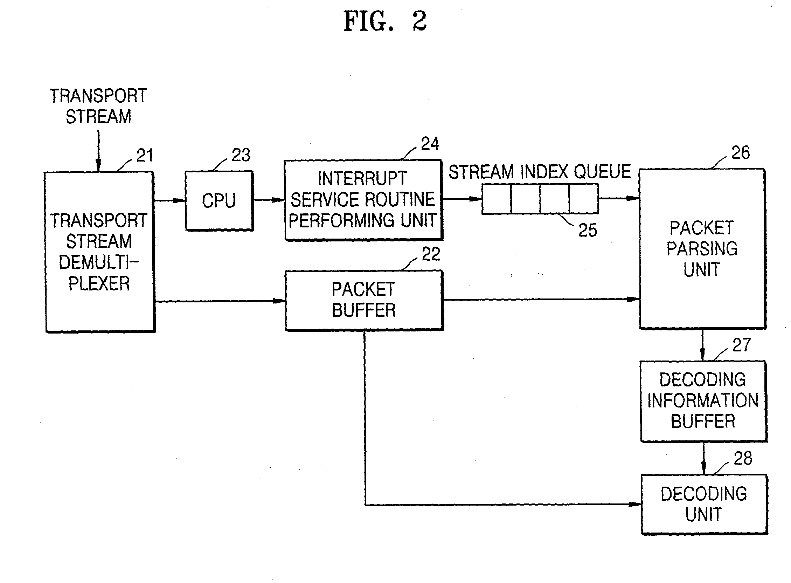

Figure 2 is a diagram of the structure of a reliable decoding apparatus according to a preferred embodiment of the present invention. The reliable decoding apparatus includes a transport stream (TS) demultiplexer 21, a packet buffer 22, a central processing unit (CPU) 23, an interrupt service routine (ISR) performing unit 24, a stream index queue 25, a packet parsing unit 26, a decoding information buffer 27, and a decoding unit 28.

The TS demultiplexer 21 extracts predetermined packets, by depacketizing transport stream packets included in a transport stream transmitted by the channel decoder 13 of the digital multimedia broadcast receiver shown in Figure 1, stores the extracted packets in each stream in the packet buffer 22, and requests an interrupt for packets stored in units of streams, to the CPU 23.

If an interrupt service routine call signal from the CPU 23 receiving the interrupt requested by the TS demultiplexer 21 is received, the ISR performing unit 27 performs an interrupt service routine to store the stream index of a packet recorded in the packet buffer 22 in the stream index queue 25.

The packet parsing unit 26 reads a stream index from the stream index queue 25, reads a packet having the stream index read from the packet buffer 22, extracts decoding information by depacketizing the read packet, and stores extracted decoding information in each stream in the decoding information buffer 27. By referring to decoding information stored in each stream in the decoding information buffer 27, the decoding unit 28 reads payloads included in the packets stored in units of streams in the packet buffer 22, and decodes the read payloads.

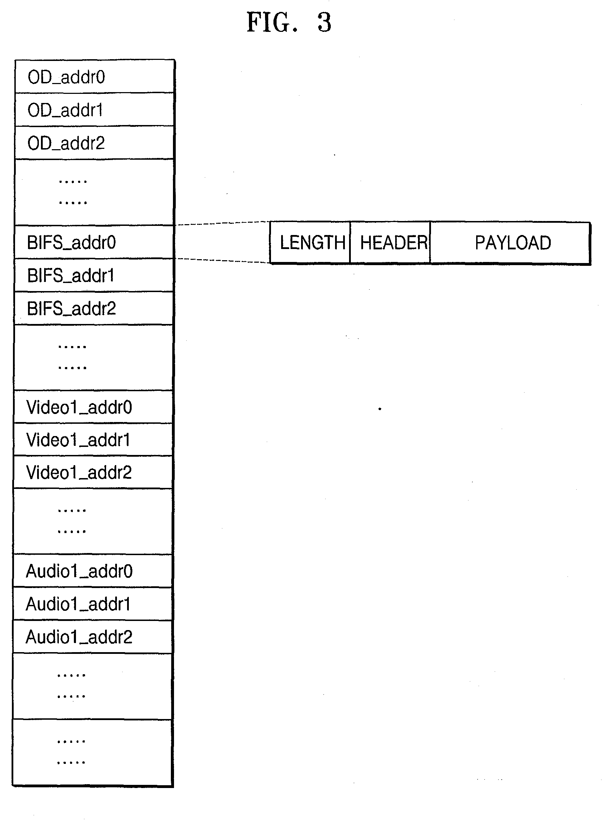

Figure 3 is a diagram showing the relationships between a transport stream packet, a packetized elementary stream (PES) packet, and a 14496 section complying with the MPEG-4 standard.

The receiver shown in Figure 1 receives a digital multimedia broadcast signal from a broadcasting station transmitting the digital multimedia broadcast signal. The received digital multimedia broadcast signal is restored to a transport stream through the tuner 11, the OFDM demodulator 12, and the channel decoder 13. The transport stream is transmitted to the MPEG-4 system, that is, the reliable decoding apparatus 15. This transport stream is formed of transport stream packets, each having a predetermined length (188 bytes). These transport stream packets are classified into program association table (PAT) packets, program map table (PMT) packets, and packets storing an object descriptor (OD) stream, a binary input format for scene (BIFS) stream, an audio stream, and a video stream. The TS demultiplexer 21 obtains a program ID (PID) of a PMT packet by parsing a PAT packet whose PID, which is a stream index, is 0, and obtains PIDs of packets storing an OD stream, a BIFS stream, a video stream, and an audio stream.

Referring to Figure 3, each of a TS stream packet is formed with a header and a payload. A predetermined number of TS stream packets are depacketized and then, by combining the depacketized packets, a packetized elementary stream (PES) packet or a 14496 section is generated. In the payload of a PES packet, a sync layer (SL) packet including a video payload or an audio payload is stored, and in the payload of a 14496 section, a sync layer (SL) packet including an OD payload or a BIFS payload is stored. An access unit (AU) stream, for example, one frame video stream or one frame audio stream, is stored In each of the payloads of the sync layers. However, since the length of an AU stream is not constant, information on the length of a sync layer packet is also stored in the header of a PES packet or a 14496 section. Generally, when an AU stream is a video stream, the AU stream is long, while when it is of an OD stream or a BIFS stream, the AU stream is short.

A case where the packet is a sync layer packet will now be explained with reference to examples. The TS demultiplexer 21 depacketizes transport stream packets included in a transport stream, and then, by combining payloads of the depacketized transport stream packets, extracts a PES packet or a 14496 section, and from the extracted PES packet or 14496 section, extracts again a sync layer packet, and stores the extracted sync layer packet by the stream in the packet buffer 22. When a sync layer packet is stored in each stream in the packet buffer 22, an interrupt for the sync layer packet stored by the stream is requested to the CPU 23.

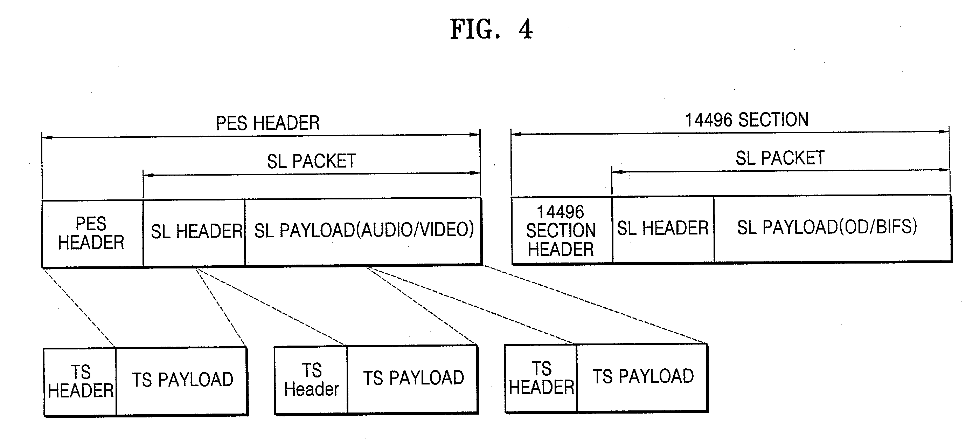

Figure 4 is a diagram showing a storage format of the packet buffer 22 shown in Figure 2.

Referring to Figure 4, the length of a sync layer packet and a sync layer packet corresponding to this length are stored at each address of the packet buffer 22. In the packet buffer 22, packets are stored in units of streams having identical PIDs such as an OD area, a BIFS area, a video 1 area, and an audio 1 area. Since each of these PIDs is an index indicating a stream, a PID will be referred to hereinafter as a stream index.

N sync layer packets can be stored in one stream area. The reason for storing packets in each stream as described above is that if streams are classified before the packet buffer 22, the streams do not need to be classified again in the decoding unit 28 in which the work load is heavy. Also, while decoding is performed in the decoding unit 28, classifying the streams is performed at the same time such that the processing speed of the MPEG-4 system as a whole can be enhanced.

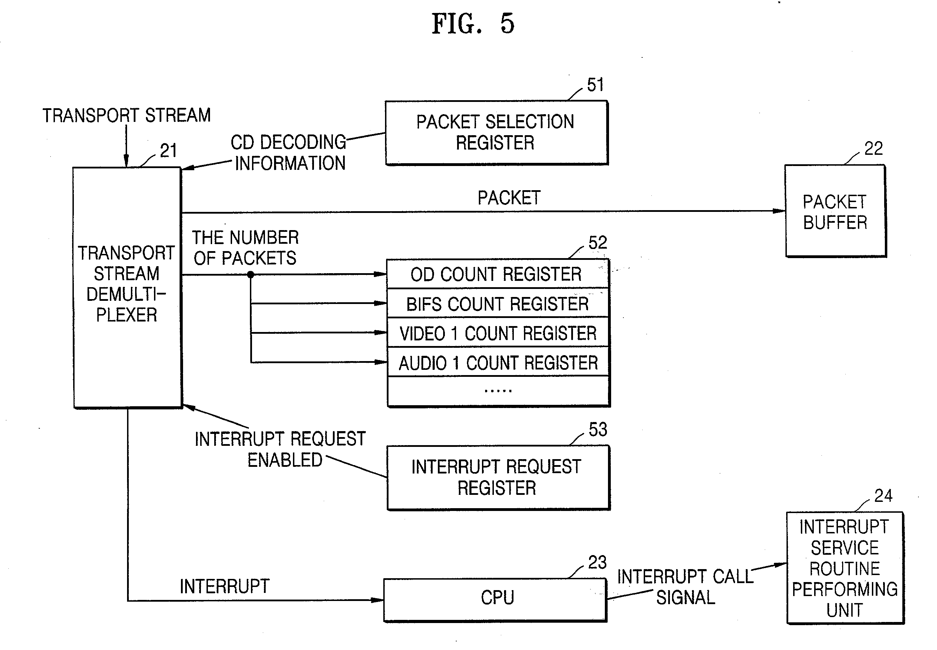

Figure 5 is a detailed diagram of the structure of the TS demultiplexer 21 shown in Figure 2.

Referring to Figure 5, the TS demultiplexer 21 depacketizes transport stream packets having a stream index stored in the packet selection register 51, among transport stream packets included in a transport stream, to extract packets. The stream indexes stored in the packet selection register 51 are determined according to OD decoding information in the decoding information extracted by the packet parsing unit 26. OD decoding information is the PID of a stream that should be decoded later in order to reproduce digital multimedia broadcast set by a user. As described above, the TS demultiplexer 21 stores extracted packets in each stream in the packet buffer 22, and in relation to the packets stored in each stream, stores the number of packets stored for each individual stream in individual stream count registers 52. For example, if 2 sync layer packets storing an OD stream, and one sync layer storing a video stream are stored by the stream in the packet buffer 22 between interrupts, 2 is added to the OD count register and 1 is added to the video count register. At this time, only when a value stored in the interrupt request register 53 indicates that interrupt request is enabled, the TS demultiplexer 21 requests an interrupt, and stores packets that are extracted between the requested interrupt and the interrupt requested immediately before the currently requested interrupt, by the stream. Here, the value stored in the interrupt request register 53 indicating that interrupt request is enabled is a value that is stored when an interrupt service routine is completed in the ISR performing unit 24.

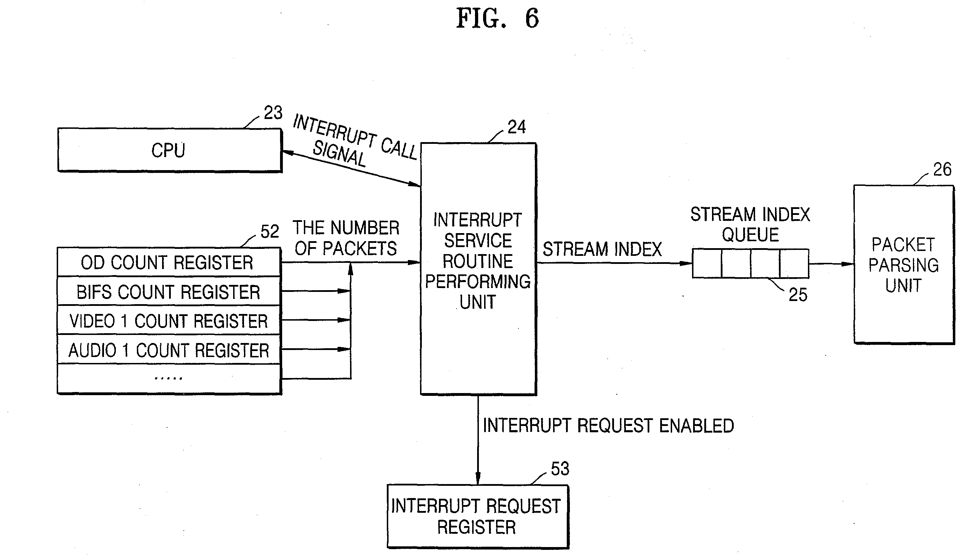

Figure 6 is a detailed diagram of the structure of the ISR performing unit 24 shown in Figure 2.

Referring to Figure 6, if an interrupt call. signal from the CPU 23 is received, the ISR performing unit 24 performs an interrupt service routine. Here, the interrupt service routine is a kind of function that is performed with priority after stopping other jobs by the MPEG-4 system if an interrupt is requested. Since information required for performing an interrupt service routine is exchanged by using registers as described above, the interrupt can be processed in a very short time. Accordingly, when the entire performance of the MPEG-4 system is considered, this interrupt hardly affects decoding jobs. If the interrupt service routine begins, first, the number of packets in each individual stream is read from the individual stream count registers 52. Stream indexes corresponding to the number of packets in each individual stream are stored in the steam index queue 25. For example, if 2 is stored in the OD count register and 1 is stored in the video 1 count register, the PID of the OD stream is twice continuously stored and the PID of the video stream is once stored.

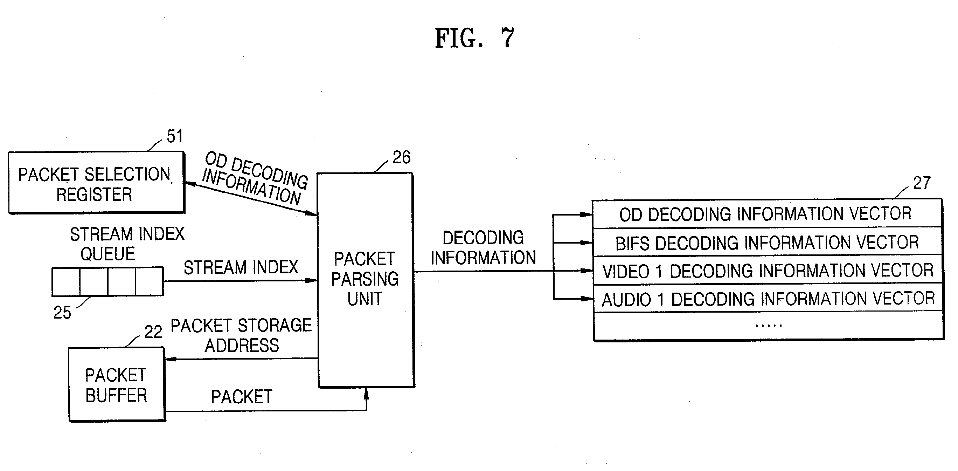

Figure 7 is a detailed diagram of the structure of the packet parsing unit 26 shown in Figure 2.

Referring to Figure 7, the packet parsing unit 26 reads a stream index stored in the stream index queue 25. Since sync layer packets are stored by the stream in the packet buffer 22, the storage area for each stream is always identical. Accordingly, the storage location of the packet of the stream index can be identified with only a stream index. However, the start address of each individual stream area should be fixedly stored such that, by reading stream indexes stored in the stream index queue 25 sequentially from the start address, the packet parsing unit 6 can read correct packets. The packet parsing unit 26 depacketizes the read packets to extract decoding information, and stores extracted decoding information by the stream in the decoding information buffer 27. By referring to decoding information stored in each stream in the decoding information buffer 27 by the packet parsing unit 26, the decoding unit 28 reads payloads included in the packets stored by the stream in the packet buffer 22, and decodes the read payloads in units of streams simultaneously.

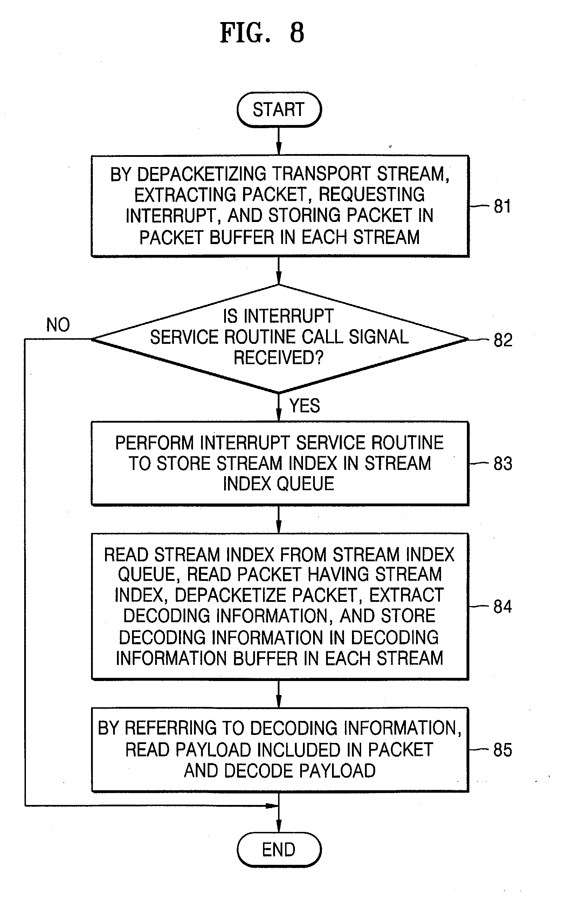

Figure 8 is a flowchart of the steps performed by a reliable decoding method according to a preferred embodiment of the present invention.

Referring to Figure 8, steps of the reliable decoding method will now be explained.

By depacketizing transport stream packets included in a transport stream, packets are extracted, and stored by the stream in a packet buffer, and an interrupt for the packets stored in each stream is requested to a CPU in step 81. At this time, the extracted packets are stored in each stream in the packet buffer and in relation to the packets stored in each stream, the numbers of packets in respective streams are stored in individual stream count registers in step 81. If an interrupt service routine call signal is received from the CPU, which receives the requested interrupt, in step 82, then an interrupt service routine to store the stream indexes of packets recorded in the packet buffer in a stream index queue is performed in step 83. At this time, the same number of stream indexes as the number of packets in each individual stream stored in the individual stream count registers are stored in the stream index queue, and an interrupt service routine to store in an interrupt request register a value indicating that an interrupt request is enabled is performed. At this time, step 81 is performed only when the value stored in the interrupt request register indicates that an interrupt request is enabled, and packets extracted between the requested interrupt and the interrupt requested immediately before the currently requested interrupt are stored in each stream.

Next, a stream index is read from the stream index queue, a packet having the read stream index is read from the packet buffer, decoding information is extracted by depacketizing the read packet, and the extracted decoding information is stored in each stream in a decoding information buffer in step 84. Then, by referring to decoding information stored in each stream in the decoding information buffer, the payloads included in the packets stored in each stream in the packet buffer are read and decoded in step 85. At this time, in the step 85, a stream index determined according to an OD descriptor decoding information in the extracted decoding information is stored in a packet selection register, and in step 81, packets are extracted by depacketizing transport stream packets having stream indices stored in the packet selection register, among transport stream packets included in the transport stream.

The packets described above can generally be sync layer packets.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

While the present invention has been particularly shown and described with reference to exemplary embodiments thereof, it will be understood by those of ordinary skill in the art that various changes in form and details may be made therein without departing from the spirit and scope of the present invention as defined by the following claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

According to the present invention, since preparation of decoding is processed by using an interrupt method, a plurality of elements do not need to be checked continuously unlike in a polling method, such that the performance of an MPEG-4 system is enhanced.

Also, according to the present invention, by introducing a stream index queue, a process for performing an interrupt service routine and a process for parsing packets are performed independently in parallel such that the performance of the MPEG-4 system is improved.

Furthermore, according to the present invention, by introducing the stream index queue, all received packets are decoded without loss, and ultimately reliable decoding can be implemented.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A reliable decoding method comprising:
(a) if an interrupt call signal is received, performing an interrupt service routine to store a stream index;
(b) reading the stored stream index and by depacketizing a packet having the read stream index, extracting decoding information; and
(b) by referring to extracted decoding information, reading a payload included in the packet and decoding the read payload.

2. The method of claim 1, wherein the packet is a sync layer packet.

3. The method of claim 1 or 2, wherein in (a) performing an interrupt service routine to store a stream index, an interrupt service routine to store the stream index of a packet stored in each stream is performed, and in (c) reading the payload included in the packet by referring to extracted decoding information, the payload included in the packet stored in each stream is read by referring to decoding information stored in each stream.

4. The method of claim 1, 2 or 3, further comprising:
(d) by depacketizing transport stream packets included in a transport stream, extracting the packets, storing the extracted packets by the stream, and requesting an interrupt for the packets stored in each stream.

5. The method of claim 4, wherein in (d) extracting the packets, storing the extracted packets by the stream, and requesting an interrupt for the packets stored in each stream, the number of packets stored in each individual stream is stored, and in (a) performing an interrupt service routine to store a stream index, the same number of stream indexes as the number of packets stored in individual streams are stored and an interrupt service routine to store a value indicating that interrupt request is enabled is performed.

6. The method of claim 5, wherein in (d) extracting the packets, storing the extracted packets by the stream, and requesting an interrupt for the packets stored in each stream, only when the value indicating that interrupt request is enabled is stored, an interrupt is requested, and packets extracted between the requested interrupt and the interrupt requested immediately before the currently requested interrupt are stored in each stream.

7. The method of claim 4, 5 or 6, wherein in (b) reading the stored stream index and by depacketizing a packet having the read stream index, extracting decoding information, a stream index determined according to object descriptor decoding information in the extracted decoding information is stored, and in (d) extracting the packets, storing the extracted packets by the stream, and requesting an interrupt for the packets stored in each stream, the packets are extracted by depacketizing transport stream packets having a stream index determined according to the object descriptor decoding information.

8. A reliable decoding apparatus comprising:
an interrupt service routine performing unit (24) which if an interrupt call signal is received, performs an interrupt service routine to store a stream index;
a packet parsing unit (26) which reads the stored stream index and by depacketizing a packet having the read stream index, extracts decoding information; and
a decoding unit (28) which by referring to extracted decoding information, reads a payload included in the packet and decodes the read payload.

9. The apparatus of claim 8, wherein the interrupt service routine performing unit (24) performs an interrupt service routine to store the stream index of a packet stored in each stream, and the decoding unit (28) reads the payload included in the packet stored in each stream, by referring to decoding information stored in each stream.

10. The apparatus of claim 8 or 9, further comprising:
a transport stream demultiplexer (21) which by depacketizing transport stream packets included in a transport stream, extracts the packets, stores the extracted packets by the stream, and requests an interrupt for the packets stored in each stream.

11. A reliable decoding method comprising:
(a) if an interrupt call signal from a central processing unit (CPU) is received, performing an interrupt service routine to store a stream index of packets stored in each stream in a packet buffer, in a stream index queue;
(b) reading the stored stream index from the stream index queue, reading packets having the read stream index, from the packet buffer, extracting decoding information by depacketizing the read packets, and storing the extracted decoding information by the stream in a decoding information buffer; and
(c) by referring to the decoding information stored in each stream in the decoding information buffer, reading payloads included in the packets stored in each stream in the packet buffer, and decoding the read payloads.

12. The method of claim 11, wherein the packet is a sync layer packet.

13. The method of claim 11 or 12, further comprising:
(d) by depacketizing transport stream packets included in a transport stream, extracting the packets, storing the extracted packets by the stream in the packet buffer, and requesting an interrupt for the packets stored in each stream, to the CPU, wherein in (a) performing an interrupt service routine to store a stream index of packets, if the interrupt service routine call signal from the CPU receiving the interrupt requested in (d) is received, an interrupt service routine to store the stream index of the packets recorded in the packet buffer, in a stream index queue is performed.

14. The method of claim 13, wherein in (d) extracting the packets, storing the extracted packets by the stream in the packet buffer, and requesting an interrupt for the packets stored in each stream, to the CPU, the extracted packets are stored in each stream in the packet buffer, and the number of packets stored in each individual stream is stored in individual stream count registers, and
in (a) performing an interrupt service routine to store a stream index of packets, the same number of stream indexes as the number of packets in individual streams stored in the individual stream count registers are stored in the stream index queue, and an interrupt service routine to store a value indicating that interrupt request is enabled in an interrupt request register is performed.

15. The method of claim 14, wherein in (d) extracting the packets, storing the extracted packets by the stream in the packet buffer, and requesting an interrupt for the packets stored in each stream, to the CPU, only when the value stored in the interrupt request register indicates that an interrupt request is enabled, an interrupt is requested, and packets extracted between the requested interrupt and the interrupt requested immediately before the currently requested interrupt are stored in each stream.

16. The method of claim 13, 14 or 15, wherein in (c) reading payloads included in the packets stored in each stream in the packet buffer and decoding the read payloads, a stream index determined according to object descriptor decoding information in the extracted decoding information is stored in a packet selection register, and
in (d) extracting the packets, storing the extracted packets by the stream in the packet buffer, and requesting an interrupt for the packets stored in each stream, to the CPU, the packets are extracted by depacketizing transport stream packets having a stream index stored in the packet selection register, among transport stream packets included in the transport stream.

17. A reliable decoding apparatus comprising:
an interrupt service routine performing unit (24) which if an interrupt call signal from a CPU is received, performs an interrupt service routine to store a stream index of packets stored in each stream in a packet buffer, in a stream index queue;
a packet parsing unit (26) which reads the stored stream index from the stream index queue, reads packets having the read stream index from the packet buffer, extracts decoding information by depacketizing the read packets, and stores the extracted decoding information by the stream in a decoding information buffer; and
a decoding unit (28) which by referring to the decoding information stored in each stream in the decoding information buffer, reads payloads included in the packets stored in each stream in the packet buffer, and decodes the read payloads.

18. A computer readable recording medium having embodied thereon a computer program for a reliable decoding method, wherein the method comprises:
if an interrupt call signal is received, performing an interrupt service routine to store a stream index;
reading the stored stream index and by depacketizing a packet having the read stream index, extracting decoding information; and
by referring to extracted decoding information, reading a payload included in the packet and decoding the read payload.

19. A computer readable recording medium having embodied thereon a computer program for a reliable decoding method, wherein the method comprises:
if an interrupt call signal from a CPU is received, performing an interrupt service routine to store a stream index of packets stored in each stream in a packet buffer, in a stream index queue;
reading the stored stream index from the stream index queue, reading packets having the read stream index from the packet buffer, extracting decoding information by depacketizing the read packets, and storing the extracted decoding information by the stream in a decoding information buffer; and
by referring to the decoding information stored in each stream in the decoding information buffer, reading payloads included in the packets stored in each stream in the packet buffer, and decoding the read payloads.
